# EUROPEAN PATENT APPLICATION

(11) **EP 4 801 080 A1**
(43) Date of publication of application: **02.09.2026**
(21) Application number: 24898129.2
(22) Date of filing: 27.11.2024
(51) Int. Cl.: H04W 4/80, H04W 76/14, H04W 8/00, H04W 4/06

(54) **METHOD AND APPARATUS FOR PROVIDING ULTRA-WIDEBAND SERVICE BY USING BLUETOOTH LOW POWER COMMUNICATION**

(30) Priority: 28.11.2023 KR 20230168212
(71) Applicant: Samsung Electronics Co., Ltd., Suwon-si, Gyeonggi-do 16677 (KR)
(72) Inventor: HA, Taeyoung, Suwon-si Gyeonggi-do 16677 (KR); LEE, Mingyu, Suwon-si Gyeonggi-do 16677 (KR)
(74) Representative: HGF
(86) International application number: PCT/KR2024/019021
(87) International publication number: WO 2025/116535

(57) **Abstract**

The present disclosure discloses a method for operating a plurality of UWB channels. A method for a first electronic device, according to various embodiments of the present disclosure, comprises the steps of: receiving, from a second electronic device, information regarding an advertisement interval related to the second electronic device; receiving, from a user, an input for instructing a search for the second electronic device; in response to the input, scanning a Bluetooth low energy (BLE) advertisement message related to ultra-wideband (UWB) multi-millisecond (MMS) ranging of the second electronic device; and when having failed to receive the BLE advertisement message from the second electronic device for a time corresponding to a real multiple of the advertisement interval, stopping the operation of scanning the BLE advertisement message.

## Description

### [Technical Field]

The disclosure relates to UWB communication, and more particularly, to a method and device for providing a UWB service using BLE communication.

### [Background Art]

The Internet is evolving from the human-centered connection network by which humans create and consume information to the Internet of Things (IoT) network by which information is communicated and processed between things or other distributed components. Another emerging technology is the Internet of Everything (IoE), which is a combination of the Big data processing technology and the IoT technology through, e.g., a connection with a cloud server. Implementing the IoT requires technical elements, such as sensing technology, wired/wireless communication and network infrastructure, service interface technology, and security technology. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the connected things to create new value for human life. The IoT may have various applications, such as the smart home, smart building, smart city, smart car or connected car, smart grid, health-care, or smart appliances, or state-of-the-art medical services, through convergence or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB). UWB is a wireless communication technology that uses a very wide frequency band of several GHz or more in a baseband without using a wireless carrier.

### [Detailed Description of the Invention]

### [Technical Problem]

The disclosure proposes a scheme for providing an ultra-wideband (UWB) service. More specifically, the disclosure relates to a method and device for providing an ultra-wideband (UWB) multi-millisecond (MMS) ranging service using Bluetooth low energy (BLE) communication.

### [Technical Solution]

According to an embodiment of the disclosure, a method of a first electronic device includes: receiving, from a second electronic device, information on an advertisement interval associated with the second electronic device; receiving, from a user, an input instructing a search for the second electronic device; in response to the input, scanning a Bluetooth low energy (BLE) advertisement message associated with ultra-wideband (UWB) multi-millisecond (MMS) ranging of the second electronic device; and stopping an operation of scanning the BLE advertisement message, upon failing to receive the BLE advertisement message from the second electronic device for a time corresponding to a real number multiple of the advertisement interval.

According to an embodiment of the disclosure, a method of a second electronic device includes: transmitting, to a first electronic device, information on an advertisement interval associated with the second electronic device; and transmitting, to the first electronic device, a Bluetooth low energy (BLE) advertisement message associated with ultra-wideband (UWB) multi-millisecond (MMS) ranging, and scanning of the BLE advertisement message is stopped upon a time corresponding to a real number multiple of the advertisement interval being exceeded.

According to an embodiment of the disclosure, a first electronic device includes a transceiver and at least one processor, and the at least one processor is configured to: receive, from a second electronic device, information on an advertisement interval associated with the second electronic device; receive, from a user, an input instructing a search for the second electronic device; in response to the input, scan a Bluetooth low energy (BLE) advertisement message associated with ultra-wideband (UWB) multi-millisecond (MMS) ranging of the second electronic device; and stop an operation of scanning the BLE advertisement message, upon failing to receive the BLE advertisement message from the second electronic device for a time corresponding to a real number multiple of the advertisement interval.

According to an embodiment of the disclosure, a second electronic device includes a transceiver and at least one processor, and the at least one processor is configured to: transmit, to a first electronic device, information on an advertisement interval associated with the second electronic device; and transmit, to the first electronic device, a Bluetooth low energy (BLE) advertisement message associated with ultra-wideband (UWB) multi-millisecond (MMS) ranging, and scanning of the BLE advertisement message is stopped upon a time corresponding to a real number multiple of the advertisement interval being exceeded.

### [Advantageous Effects]

The service may be efficiently provided through a scheme for providing an ultra-wideband (UWB) MMS ranging service using the BLE communication of the disclosure.

### [Brief Description of Drawings]

FIG. 1A illustrates an exemplary architecture of a UWB device.
FIG. 1B illustrates an exemplary configuration of a communication system including a UWB device.
FIG. 2 illustrates an exemplary structure of a frame used for UWB communication.
FIG. 3 illustrates a method in which two UWB devices perform UWB communication.
FIG. 4 illustrates a method for performing UWB ranging by two UWB devices;
FIG. 5 illustrates a structure of a ranging block and round used for UWB ranging.
FIG. 6A is a view illustrating a multi-millisecond (MMS) ranging operation according to an embodiment of the disclosure.
FIG. 6B illustrates an operation of performing an MMS ranging operation using a BLE channel and a UWB channel according to an embodiment of the disclosure.
FIG. 7 is a view illustrating a central device and a peripheral device performing BLE-based UWB MMS ranging according to an embodiment of the disclosure.
FIG. 8 is a view illustrating an MMS ranging operation according to an embodiment of the disclosure.
FIG. 9 illustrates creating a connection between devices for a report operation in a BLE channel and performing a report operation after UWB MMS ranging according to an embodiment of the disclosure.
FIG. 10 illustrates creating a connection between devices in a BLE channel and performing repetitive UWB MMS ranging operations according to an embodiment of the disclosure.
FIG. 11 illustrates performing a UWB MMS ranging operation without creating a connection between devices for a report operation in a BLE channel according to an embodiment of the disclosure.
FIG. 12 illustrates an implicit termination operation in BLE-based MMS ranging according to an embodiment of the disclosure.
FIGS. 13A and 13B are flowcharts illustrating an operation of a central device according to an embodiment of the disclosure.
FIGS. 14A and 14B illustrate a BLE coded PHY used in BLE-based MMS ranging according to an embodiment of the disclosure.
FIG. 15 illustrates a structure diagram illustrating a first electronic device according to an embodiment of the disclosure.
FIG. 16 illustrates a structure diagram illustrating a second electronic device according to an embodiment of the disclosure.

### [Mode for Carrying out the Invention]

Hereinafter, embodiments of the present invention are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numerals refer to the same components throughout the specification.

In this case, it may be understood that each block of processing flowchart drawings and combinations of flowchart drawings may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or portion of code that includes one or more executable instructions to execute designated logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of a terminal may include a cellular phone, a smartphone having a wireless communication function, a personal digital assistant (PDA) having a wireless communication function, a wireless modem, a portable computer having a wireless communication function, an imaging device such as a digital camera having a wireless communication function, a gaming device having a wireless communication function, a music storage and playback home appliance having a wireless communication function, an Internet home appliance capable of wireless Internet access and browsing, as well as portable units or terminals incorporating combinations of such functions. Further, the terminal may include a machine to machine (M2M) terminal and a machine-type communication (MTC) terminal/device, but is not limited thereto. In the disclosure, the terminal may be referred to as an electronic device or simply as a device.

Hereinafter, an operation principle of the disclosure is described in detail with reference to accompanying drawings. When determined to make the subject matter of the disclosure unnecessarily unclear, the detailed description of known functions or configurations may be skipped in describing embodiments of the disclosure. Terms to be described below are terms defined considering functions in the disclosure, which may vary according to intentions or customs of users and operators. Therefore, the terms should be defined based on the overall disclosure.

Hereinafter, embodiments of the present invention are described in detail with reference to the accompanying drawings. Further, although a communication system using UWB is described in connection with embodiments of the disclosure, as an example, embodiments of the disclosure may also apply to other communication systems with similar technical background or features. For example, a communication system using Bluetooth or ZigBee may be included therein. Further, embodiments of the disclosure may be modified in such a range as not to significantly depart from the scope of the disclosure under the determination by one of ordinary skill in the art and such modifications may be applicable to other communication systems.

When determined to make the subject matter of the disclosure unclear, the detailed description of the known art or functions may be skipped. Terms to be described below are terms defined considering functions in the disclosure, which may vary according to intentions or customs of users and operators. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra wide band (UWB). A wireless network in which such a wireless network technology is implemented may include a plurality of electronic devices.

UWB may refer to a short-range high-rate wireless communication technology using a wide frequency band of several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controlee information and UWB session data required for a UWB session.

"Controller" may be a ranging device that defines and controls ranging control messages (RCM) (or control messages).

"Controllee" may be a ranging device using a ranging parameter in the RCM (or control message) received from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. In this disclosure, Applet may be a FiRa Applet defined by FiRa.

"Ranging device" may be a device capable of performing UWB ranging. In the disclosure, the Ranging Device may be an Enhanced Ranging Device (ERDEV) defined in IEEE 802.15.4z or a FiRa Device defined by FiRa. The Ranging Device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. In this disclosure, "UWB-enabled Application" may be abbreviated as an application or a UWB application. UWB-enabled Application may be a FiRa-enabled Application defined by FiRa.

"Framework" may be a component that provides access to Profiles, individual-UWB configuration and/or notifications. "Framework" may be, e.g., a collection of logical software components including Profile Manager, OOB Connector, Secure Service, and/or UWB service. In the disclosure, the Framework may be a FiRa Framework defined by FiRa.

"OOB Connector" may be a software component for establishing an out-of-band (OOB) connection (e.g., BLE connection) between Ranging Devices. In the disclosure, the OOB Connector may be a FiRa OOB Connector defined by FiRa.

"Profile" may be a previously defined set of UWB and OOB configuration parameters. In the disclosure, Profile may be a FiRa Profile defined by FiRa.

"Profile Manager" may be a software component that implements a profile available on the Ranging Device. In the disclosure, the Profile Manager may be a FiRa Profile Manager defined by FiRa.

"Service" may be an implementation of a use case that provides a service to an end-user.

"Smart Ranging Device" may be a ranging device that may implement an optional Framework API. In the disclosure, the Smart Ranging Device may be a FiRa Smart Device defined by FiRa.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange.

"STS" may be a ciphered sequence for increasing the integrity and accuracy of ranging measurement timestamps. The STS may be generated from the ranging session key.

"Secure channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the controller and the controllee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controllee.

"UWB session key" may be a key used to protect the UWB Session. The UWB Session Key may be used to generate the STS. In this disclosure, the UWB session key may be a UWB ranging session key (URSK), and may be abbreviated as a session key.

"UWB Subsystem (UWBS)" may be a hardware component implementing the UWB PHY and MAC specifications. UWBS may have an interface to Framework and an interface to Secure Component to search for RDS. In this disclosure, the UWB PHY and MAC specifications may be, e.g., FiRa PHY and FiRa MAC specifications defined by FiRa referring to IEEE 802.15.4/4z.

When determined to make the subject matter of the disclosure unnecessarily unclear, the detailed description of related known functions or features may be skipped in describing the disclosure.

Hereinafter, various embodiments of the disclosure are described with reference to the accompanying drawings.

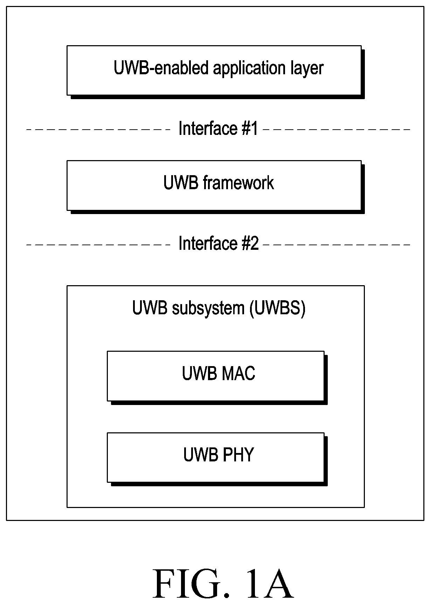

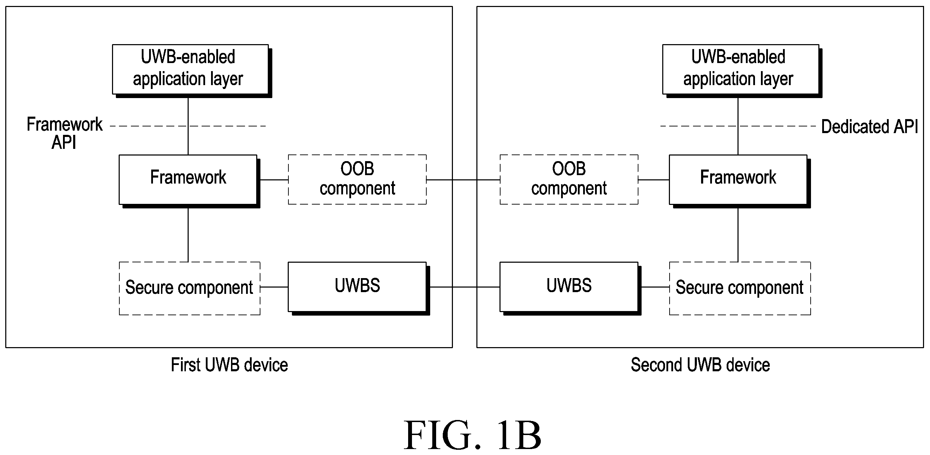

FIG. 1 illustrates an example architecture of a UWB device;
The UWB device (an electronic device) of FIG. 1 may be a ranging device supporting UWB ranging (e.g., UWB secure ranging). In an embodiment, the Ranging Device may be an Enhanced Ranging Device (ERDEV) defined in IEEE 802.15.4z or a FiRa Device defined by FiRa.

In the embodiment of FIG. 1, the UWB device may interact with other UWB devices through a UWB session.

The UWB device may implement a first interface (Interface #1) that is an interface between the UWB-enabled Application and the Framework, and the first interface allows the UWB-enabled application on the UWB device to use the UWB capabilities of the UWB device in a predetermined manner. In an embodiment, the first interface may be a Framework API or a proprietary interface, but is not limited thereto.

The UWB device may implement a second interface (Interface #2) that is an interface between the Framework and the UWB subsystem (UWBS). In an embodiment, the second interface may be a UWB Command Interface (UCI) or proprietary interface, but is not limited thereto.

Referring to FIG. 1, the UWB device may include a UWB-enabled Application, a Framework, and/or a UWBS including a UWB MAC Layer and a UWB Physical Layer. Depending on the embodiment, some entities may not be included in the UWB device, or additional entities (e.g., security layer) may be further included.

The UWB-enabled Application may trigger establishment of a UWB session by UWBS through the first interface. The UWB-enabled Application may use one of previously defined profiles (profile). For example, the UWB-enabled Application may use one of the profiles defined in FiRa or a custom profile. The UWB-enabled Application may use the first interface to handle related events, such as service discovery, ranging notifications, and/or error conditions.

The Framework may provide access to Profiles, individual-UWB settings and/or notifications. The Framework may be a set of software components. As described above, the UWB-enabled Application may interface with the Framework through the first interface, and the Framework may interface with the UWBS through the second interface. Software components of the Framework may include, e.g., Profile Manager, OOB Connector, Secure Service, and/or UWB service.

The Profile Manager may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF.

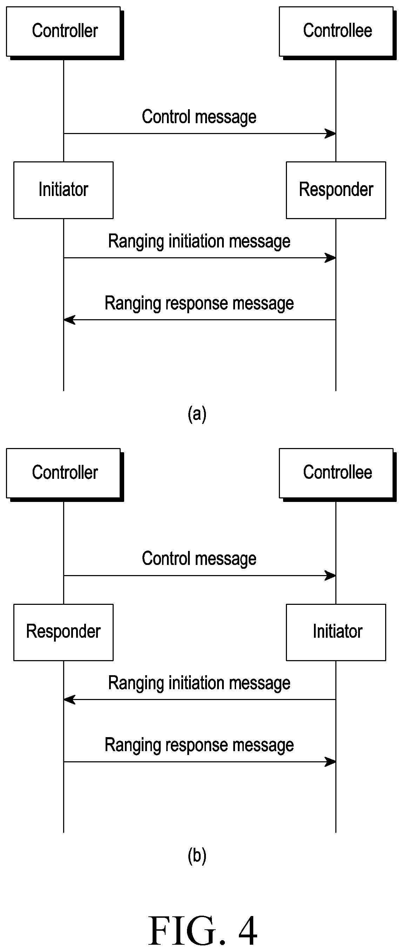

The OOB Connector may play a role to establish OOB connection between UWB devices. The OOB Connector may handle an OOB step including a discovery step and a connection step. The OOB step is described below with reference to FIG. 4.

The Secure Service may play a role of interfacing with a Secure Component, such as SE or TEE.

The UWB Service may perform a role of managing UWBS. The UWB Service may provide access to UWBS from the Profile Manager by implementing the second interface.

The UWBS may be a hardware component including a UWB MAC Layer and a UWB Physical Layer. The UWBS may perform UWB session management and may communicate with the UWBS of another UWB device. The UWBS may interface with the Framework through the second interface and may obtain the RDS from the Secure Component.

FIG. 1B illustrates an example configuration of a communication system including a UWB device.

Referring to FIG. 1B, the communication system includes a first UWB device and a second UWB device. In an embodiment, the first UWB device and the second UWB device may be, e.g., the UWB device of FIG. 1 or an electronic device including the UWB device of FIG. 1.

The first UWB may host, e.g., one or more UWB-enabled applications, which may be installed by the user (e.g., a mobile phone). It may be based on, e.g., the Framework API. The second UWB does not provide a framework API, and for example, may use a proprietary interface to implement a specific UWB-enabled application. Unlike shown, according to an embodiment, both the first UWB device and the second UWB device may be Ranging Devices using the Framework API, or both the first UWB device and the second UWB device may be Ranging Devices using the proprietary interface.

The first UWB and the second UWB may include a UWB-enabled application layer, a framework, an OOB component, a secure component, and/or a UWBS. In the disclosure, the OOB component and/or the Secure Component may be optional components and, according to an embodiment, may not be included in the UWB device.

The Framework may serve to provide access to Profiles, individual-UWB settings and/or notifications. The Framework may be a set of software components and may include, e.g., Profile Manager, OOB Connector, Secure Service, and/or UWB service. For a description of each component, refer to the above description.

The OOB components may be hardware components including a MAC layer and/or a physical layer for OOB communication (e.g., BLE communication). The OOB components may communicate with OOB components of other devices. In an embodiment, the first UWB device and the second UWB device may create an OOB connection (channel) using the OOB components and exchange parameters for establishing a UWB session through the OOB channel. In this disclosure, the OOB components may be referred to as OOB subsystems.

The UWBS may be a hardware component including a UWB MAC Layer and a UWB Physical Layer. The UWBS 209 and 219 may perform UWB session management and may communicate with the UWBS of another UWB device. In an embodiment, the first UWB device and the second UWB device may perform transaction of service data and UWB ranging through the UWB session established through the UWBSs using the exchanged parameters.

The Secure Components may be hardware components that interface with the framework and/or UWBS to provide RDS.

In the disclosure, the UWB-enabled Application Layers and/or the Frameworks may be implemented by an application processor (AP) (or processor). Accordingly, in the disclosure, it may be understood that the operations of the UWB-enabled Application Layers and/or the Frameworks are performed by an AP (or a processor).

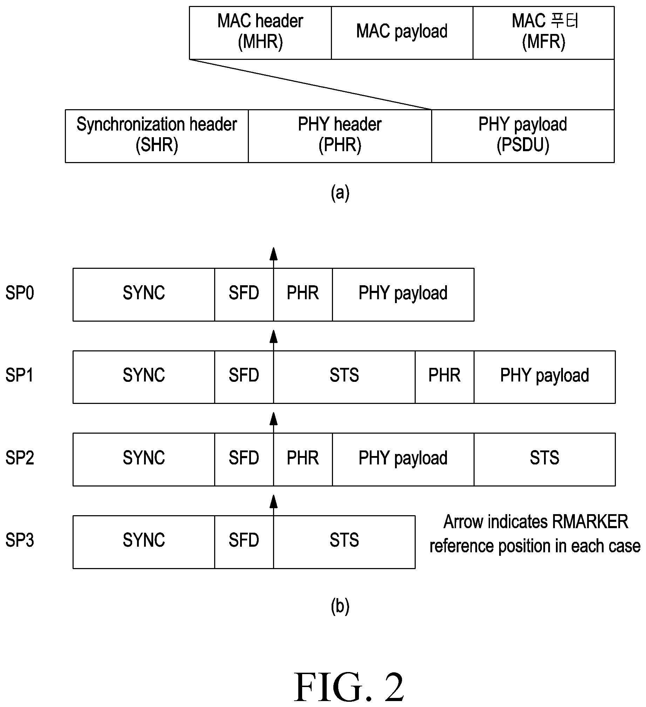

FIG. 2 illustrates an example structure of a frame used for UWB communication;

of FIG. 2 illustrates an example structure of a frame to which the STS packet configuration is not applied, and (b) of FIG. 2 illustrates an example structure of a frame to which the STS packet configuration is applied. In an embodiment, the frame may be a ranging frame (RFRAME) for transferring ranging data (e.g., ranging initiation/reply/final message, etc.) or a data frame for transferring other data (e.g., service data, etc.).

Referring to (a) of FIG. 2, the frame or a PHY PDU (PPDU) for transferring the frame may include a synchronization header (SHR), a PHY header (PHR), and a PHY payload (PSDU). The PSDU may include a MAC frame. The MAC frame may include a MAC header (MHR), a MAC payload and/or a MAC footer (MFR). The synchronization header of the PPDU may include a SYNC field and a start-of-frame delimiter (SFD). The SFD field may be a field indicating the end of the SHR and the start of the data field. For a description of each element/field included in the PPDU and MAC frame, refer to the description defined in IEEE 802.15.4/4z and/or FiRa.

Meanwhile, the PHY layer of the UWB device may include an optional mode to provide a reduced on-air time for high density/low power operation. In this case, the frame may include an encrypted sequence (i.e., STS) to increase the integrity and accuracy of the ranging measurement timestamp. The STS may be used for security ranging.

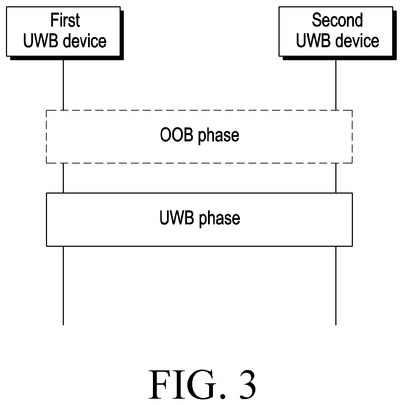

The structure of the PPDU (or frame) when the STS packet setting is applied (supported) may be as shown in FIG. 3B.

Referring to (b) of FIG. 2, in the case of STS packet (SP) setting 0 (SP0), the STS field is not included in the PPDU (SP0 packet). In the case of SP setting 1 (SP1), the STS field is positioned immediately after the Start of Frame Delimiter (SFD) field and before the PHR field (SP1 packet). In the case of SP setting 2 (SP2), the STS field is positioned after the PHY payload (SP2 packet). In the case of SP setting 3 (SP3), the STS field is positioned immediately after the SFD field, and the PPDU does not include the PHR and data field (PHY payload) (SP3 packet). In other words, in the case of SP3, the frame (or UWB message) does not include the PHR and PHY payload.

SP0, SP1 and SP3 may be settings that must be supported as mandatory when the STS packet setting is supported, and SP2 may be an optionally supported setting.

FIG. 3 illustrates a method for performing UWB communication by two UWB devices;

In the embodiment of FIG. 3, a first UWB device may play a role as a controller (or controllee), and a second UWB device may play a role as a controllee (or controller), which is the role opposite to the role of the first UWB device. The first UWB device may play a role as an initiator (or responder), and the second UWB device may play a role as a responder (or initiator), which is the role opposite to the role of the first UWB device.
(1) Referring to FIG. 3, the first UWB device and the second UWB device may optionally perform an OOB step before the UWB step. In this disclosure, the OOB step may be referred to as an OOB connection step.

The OOB step may be a step performed to discover UWB devices through the OOB channel (e.g., BLE channel) and to establish and control a UWB session.

In an embodiment, the OOB step may include at least one of the following steps.
- discovering UWB devices and profiles (device and profile discovery)
- establishing an OOB connection (channel)
- establishing a secure channel to secure messages and data
- exchanging parameters for establishing a UWB session through the secure channel (e.g., UWB capability parameters (controllee capability parameters), UWB configuration parameters and/or session key-related parameters) (parameter exchange step)

In an embodiment, the parameter exchange step may include the step for the controllee to transfer controllee capability parameters/messages (UWB_CAPABILITY) to the controller, the step for the controller to transfer UWB configuration parameters/messages (UWB_CONFIGURATION) to the controllee, and/or the step for one UWB device to transfer session key-related parameters/messages (SESSION_KEY_INFO) for protecting the UWB session to the other UWB device.

In an embodiment, the controllee (UWB) capability parameter and/or session key parameter may be included and transmitted in the controllee information message (CONTROLLEE_INFO) which is the OOB message transferred from the controllee to the controller. In an embodiment, the UWB configuration parameter and/or session key parameter may be included and transmitted in the session data message (SESSION_DATA) which is the OOB message transferred from the controller to the controllee.

The controllee performance parameter (UWB_CAPABILITY) may include at least one parameter that provides information about the device capability of the controllee. For example, the controller performance parameter may include a parameter for supporting the role of the device (initiator or responder), a parameter for multi-node support, a parameter for supporting STS configuration, a parameter for supporting a ranging method, a RFRAME feature performance parameter, a parameter for supporting Angle of Arrival (AoA), and/or a parameter for supporting Scheduled Mode.

The UWB configuration parameter (UWB_CONFIGURATION) may include at least one parameter used for configuration of a UWB session. For example, UWB configuration parameters may include a UWB session ID parameter, a ranging method parameter, a multi-node configuration parameter, an STS configuration parameter, a Scheduled Mode parameter, a time-of-flight (ToF) report parameter, an AoA-related parameter, a parameter indicating the number of slots per ranging round, a slot duration parameter, a responder slot index parameter, a MAC address mode parameter, a device MAC address parameter, a parameter indicating the number of controllees, and/or a destination (DST) MAC address parameter.

The session key-related parameter (SESSION_KEY_INFO) may include a session key-related parameter for Dynamic STS and/or a session key-related parameter for Static STS. For example, the session key-related parameter for Dynamic STS may include data exchanged to generate a UWB session key or data directly used as a UWB session key. For example, the Static STS may include an ID (Vendor ID) of a vendor that is a provider of the UWB-enabled application and any pre-defined value (Static STS IV) selected by the UWB-enabled application for the UWB device. The vendor ID may be used to set the phyVupper64 parameter for Static STS, and the Static STS IV may be used to set the vUpper64 parameter.

(2) The first UWB device and the second UWB device may perform a UWB step. In this disclosure, the UWB step may be referred to as an UWB connection step.

The UWB step may be a step which is performed to perform UWB ranging through the UWB session and transfer service data.

In an embodiment, the UWB step may include at least one of the following steps.
- Starting a UWB session (UWB Trigger)
- Performing UWB ranging to obtain the distance/position between two UWB devices
- Exchanging service data (transaction)

As described above, the OOB step is an optional step and may be omitted in some embodiments. For example, when discovery of a UWB device and/or establishment and control of a UWB session are performed through a UWB channel (in-band), the OOB step may be omitted. For example, when in-band discovery is performed, the OOB step of performing OOB discovery may be omitted. In this case, the UWB step may further perform an operation for discovering a UWB device through the UWB channel and exchanging parameters for UWB session configuration.

FIG. 4 illustrates a method for performing UWB ranging by two UWB devices;
of FIG. 4 illustrates an embodiment in which the first UWB device operates as the controller/initiator, and the second UWB device operates as the controllee/responder. (b) of FIG. 4 illustrates an embodiment in which the first UWB device operates as the controller/responder, and the second UWB device operates as the controllee/initiator.

Referring to (a) and (b) of FIG. 4, the controller may transmit a control message for UWB ranging to the controllee. The ranging control message may be used to carry ranging parameter(s) for controlling and configuring a ranging procedure. In an embodiment, the control message may include information about the role (e.g., initiator or responder) of the ranging device, ranging slot index information, and/or address information about the ranging device.

The initiator may transmit a ranging Initiation message for initiating UWB ranging to the responder. In an embodiment, the initiators may transmit a ranging initiation message through an SP1 packet or an SP3 packet. When the ranging initiation message is transmitted through the SP1 packet, the control message may be included and transmitted in the PHY payload of the ranging initiation message. When the ranging initiation message is transmitted through the SP3 packet, the ranging initiation message does not include the PHR and PHY payloads.

The responder may transmit a ranging reply message to the initiator in response to the ranging initiation message. In an embodiment, the responders may transmit a ranging reply message through an SP1 packet or an SP3 packet. When the ranging reply message is transmitted through the SP1 packet, a first measurement report message may be included and transmitted in the PHY payload of the ranging reply message. In an embodiment, the first measurement report message may include an AoA measurement, a reply time measured by the responder and/or a list of round-trip time measurements for responders and responder addresses. The reply time field may indicate a time difference between the reception time of the ranging initiation message and the transmission time of the ranging reply message at the responder side. Based on this, single-sided two-way ranging (SS-TWR) may be performed. ToF calculation through SS-TWR follows the scheme defined in IEEE 802.15.4z or FiRa.

In the case of double-sided two-way ranging (DS-TWR), the initiators may further transmit a ranging final message to the responders to complete the ranging exchange. When the ranging final message is transmitted through the SP1 packet, a second measurement report message may be included and transmitted in the PHY payload of the ranging final message. In an embodiment, the second measurement report message may include an AoA measurement, the round-trip time for the first responder (first round-trip time) and/or a list of reply time measurements for responders and responder addresses. When the sender of the Measurement Report Message is the initiator, the First round-trip time field may indicate a time difference between the ranging initiation message from the initiator and the first ranging reply message from the first responder. Alternatively, when the sender of the Measurement Report Message is the responder, the First round-trip time field may indicate a time difference between the ranging reply message from the responder and the ranging final message from the initiator. Based on this, DS-TWR may be performed. Time-of-flight (ToF) calculation through DS-TWR follows the scheme defined in IEEE 802.15.4z or FiRa.

According to an embodiment, the above-described first measurement report message and/or second measurement report message may not be included in the ranging reply message and/or the ranging final message but may be transmitted as separate messages. For example, when the non-deferred mode is applied, the measurement report message may be transmitted through the data frame after the ranging exchange.

Meanwhile, the initiator and responder may perform UWB ranging according to a preset Schedule Mode. For example, in the time-scheduled ranging mode, the controller may know the IDs of all controllees and may designate an accurate schedule of ranging transmission. As another example, in the contention-based ranging mode, the controller does not know the number and ID of the controllees, and thus UWB devices compete with each other. In this case, a collision may occur between the responding devices.

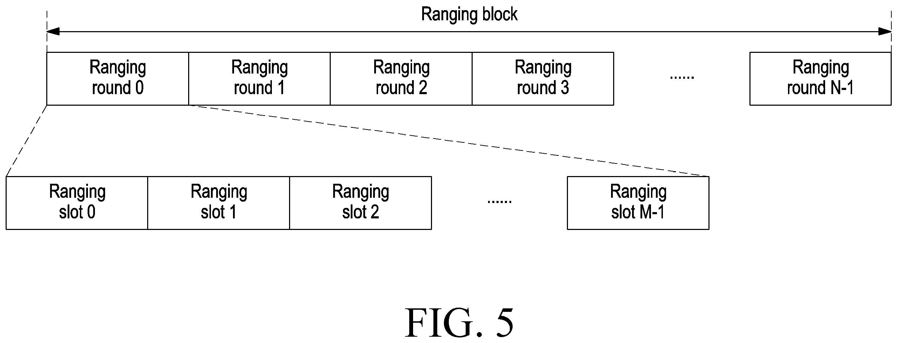

FIG. 5 illustrates a structure of a ranging block and a round used for UWB ranging;
In this disclosure, the ranging block refers to a time period for ranging. The ranging round may be a period of sufficient duration to complete one entire range-measurement cycle in which a set of UWB devices participating in a ranging exchange involves. The ranging slot may be a sufficient period for transmission of at least one ranging frame (RFRAME) (e.g., ranging initiation/reply/final message, etc.).

As shown in FIG. 5, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds. This may be configured through a control message from the controller.

The UWB protocol is applicable to a use case for handling multiple users and providing fast authentication or payment. For example, the UWB protocol is applicable to a gate service in which users having a UWB device (e.g., smartphone) may process authentication or payment without interaction on the UWB device to pass a UWB-based gate system.

The disclosure proposes an example system architecture, example OOB procedure (e.g., BLE procedure), ranging procedure, and transaction procedure for providing a UWB service for multiple users, e.g., the gate system.

The disclosure also proposes a method for operating a plurality of UWB channels to reduce service delay.

The following description of embodiments focuses primarily on the gate service (smart gate service). However, this is merely an example. Embodiments of the disclosure are also applicable to various types of services (e.g., PoS payment service) requiring fast authentication or payment processing for multiple users. In this case, what has been described above in connection with FIGS. 1 to 6 may be referenced for the example system architecture, example OOB procedure (e.g., BLE procedure), ranging procedure, and transaction procedure for providing the service.

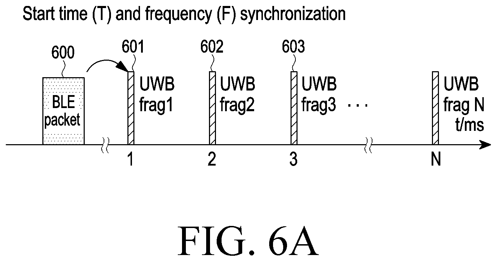

FIG. 6A is a view illustrating a multi-millisecond (MMS) UWB ranging operation according to an embodiment of the disclosure.

The MMS UWB may be a mode defined in IEEE 802.15.4ab that transmits multiple fragments/packets through UWB at regular intervals (e.g., 0.5 ms, 1 ms, etc.) to enhance a link budget and time of flight (ToF) accuracy.

A "link budget" refers to the sum of power and loss factors required for data transmission between a transmitter and a receiver. The link budget refers to a value considering all losses and gains occurring after a transmission signal is transmitted until received at a receiver. The link budget may be calculated by considering transmission power, reception sensitivity, transmission distance, transmission medium (atmosphere, obstacle, etc.), antenna gain, loss factor, or the like. In a UWB system, performance may be enhanced by selecting an appropriate antenna, transmission power, receiver, and transmitter considering the link budget.

Here, the transmission interval of multiple fragments/packets is not limited to a specific length. For example, each fragment (or UWB packet including each fragment) may be multi-transmitted through UWB at intervals of 1 ms. Such multiple fragments/packets may be used for UWB ranging (e.g., SS-TWR, DS-TWR, etc.). A UWB system shall comply with a maximum transmission power limit defined by a regulatory authority so as not to cause unnecessary interference to other wireless systems. For this purpose, a data length transmittable per transmission may need to comply with 1 ms.

Referring to FIG. 6A, a first UWB device may transmit an OOB packet (e.g., a BLE packet) 600 through an OOB channel (e.g., a BLE channel) and a plurality of UWB fragments 601, 602, 603, ... through a UWB channel to a second UWB device. The OOB packet 600 may provide initial time and frequency synchronization for the UWB fragments 601, 602, 603, ... so that the UWB device may combine a plurality of 1 ms fragments to enhance the link budget. Further, the OOB packet 600 may transmit a transmission start time and period information for the UWB fragments 601, 602, 603, ... and minimize a UWB packet length by performing data offloading.

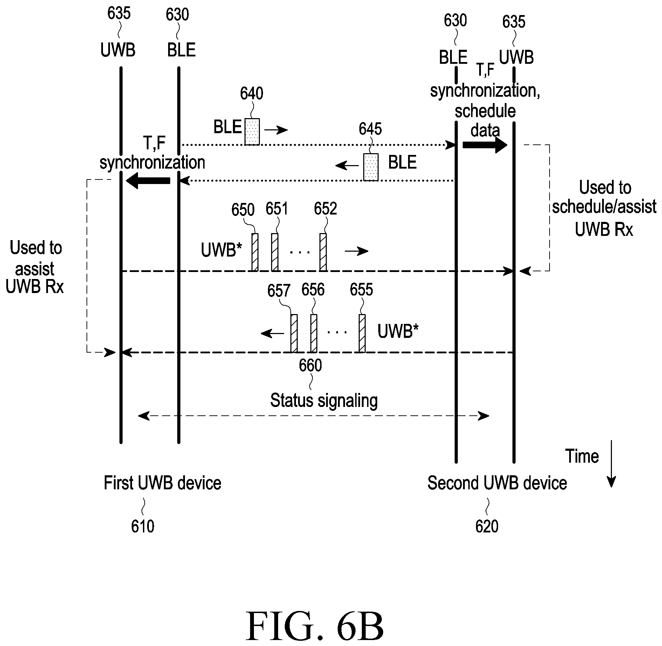

FIG. 6B illustrates an operation of communicating using a BLE channel and a UWB channel according to an embodiment of the disclosure.

Referring to FIG. 6B, a first UWB device 610 and a second UWB device 620 may transmit/receive a BLE packet 640, 645 through a BLE channel 630, as an example of the OOB channel. Thereafter, the first UWB device 610 and the second UWB device 620 may transmit/receive multiple fragments/packets 650, 651, 652, 655, 656, 657, ... through a UWB channel 635 that is time/frequency synchronized by the BLE packet 640, 645. In this case, reception of the multiple fragments/packets 650, 651, 652, 655, 656, 657, ... in the UWB channel may be scheduled by the BLE packet 640, 645. Thereafter, the first UWB device 610 and the second UWB device 620 may perform mutual status signaling.

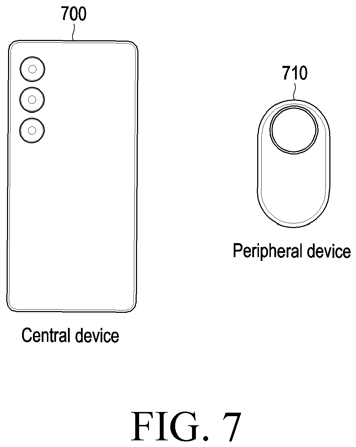

FIG. 7 is a view illustrating a central device and a peripheral device performing BLE-based UWB MMS ranging according to an embodiment of the disclosure.

Referring to FIG. 7, a central device 700 is a device that a user currently carries, and may include, e.g., a cellular phone, a smartphone having a wireless communication function, a personal digital assistant (PDA) having a wireless communication function, a wireless modem, a portable computer having a wireless communication function, an imaging device such as a digital camera having a wireless communication function, a gaming device having a wireless communication function, a music storage and playback home appliance having a wireless communication function, an Internet home appliance capable of wireless Internet access and browsing, as well as portable units or terminals incorporating combinations of such functions.

Further, a peripheral device 710 is a device whose location a user wants to discover, and may include, e.g., a location tracker, or a separate terminal connected to the central device 700 using short-range wireless communication.

In an embodiment, the central device 700 and the peripheral device 710 may establish an initial connection. In an embodiment, the peripheral device 710 may operate as an advertiser and periodically transmit an advertisement message (ADV-IND). In an embodiment, the central device 700 may operate as a scanner and, when there is an instruction from a user to discover the peripheral device 710, perform a scanning operation and then transmit a CONNECT-IND to the peripheral device 710 to start a connection event.

In an embodiment, an example of information included in the ADV-IND is as illustrated in Table 1 or Table 2 below. The ADV-IND may be cascaded and transmitted including the information of Table 1 and Table 2 below, or may be transmitted separately.

**[Table 1]**

| Parameter | Size (octets) | Notes | Value (hex) |
|---|---|---|---|
| Length | 1 | Length of AD Type | 0x03 |
| AD Type | 1 | 16-bit service UUID | 0x03 |
| AD Data | 2 | BLE based MMS Ranging Service UUID | TBD |

**[Table 2]**

| Parameter | Size (octets) | Notes | Value (hex) |
|---|---|---|---|
| Length | 1 | Length of AD Type | 0x15 |
| AD Type | 1 | Service data - 128-bit UUID | 0x21 |
| AD Data | 16 | Service Protocol UUID | TBD |
| AD Data | 4 | Advertisement Interval value(N)Advertisement Interval = N * 0.625 ms | 0x0000 - 0xFFFF |

Referring to Table 1 above, the central device 700 may filter the ADV_IND to be found using a BLE based MMS Ranging Service universally unique identifier (UUID) among the information included in the ADV_IND. In an embodiment, the central device 700 and the peripheral device 710 use a random address such as a resolvable private address (RPA) for anonymity, and may secure a shared key capable of identifying each other's random address using bonding of BLE pairing or another method. Referring to Table 2 above, the peripheral device 710 may include Advertisement Interval information in the ADV-IND and transmit the same. In an embodiment, the central device 700 may obtain the Advertisement Interval through data communication or a generic attribute (GATT) profile after Connection setup, although the Advertisement Interval may be included in the ADV_IND.

The central device 700 may operate as a scanner and scan the ADV_IND including the BLE based MMS Ranging Service UUID described in Table 1 above using information (shared key) secured when previously establishing a connection to the peripheral device to identify the peripheral device to be found.

In this case, upon discovering the ADV_IND of the peripheral device 710 to be found, the central device 700 may perform a Connection using the CONNECT_IND message. In an embodiment, upon failing to receive the ADV_IND including the BLE based MMS Ranging Service UUID of the peripheral device to be found even though scanning has been performed for the Advertisement Interval value obtained before Scanning or a (preset) real number multiple of this value, the central device 700 may notify the user that the device is not nearby (i.e., it is possible to notify the user by identifying that the device is absent before Scan timeout).

In an embodiment, upon failing to receive the ADV_IND including the BLE based MMS Ranging Service UUID of the peripheral device to be found even though scanning has been performed for the Advertisement Interval value obtained before Scanning or a (preset) real number multiple of this value, the central device 700 may notify the user to move to another location to discover the peripheral device.

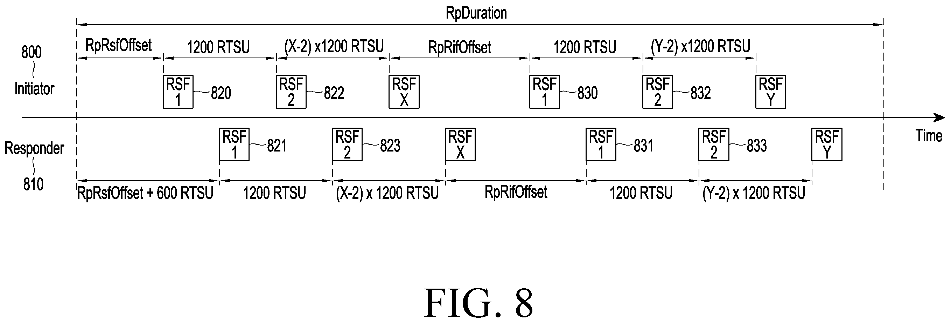

FIG. 8 is a view illustrating an MMS ranging operation according to an embodiment of the disclosure.

Referring to FIG. 8, an initiator 800 and a responder 810 performing a UWB MMS ranging operation are illustrated, and the central device 700 of the UWB MMS ranging illustrated in FIG. 7 may operate as the initiator 800, and the peripheral device 710 may operate as the responder 810. In an embodiment, the central device 700 of the UWB MMS ranging illustrated in FIG. 7 may operate as the responder 810, and the peripheral device 710 may operate as the initiator 800.

In FIG. 8, the initiator 800 and the responder 810 may perform a UWS MMS ranging operation by transmitting/receiving a ranging sequence fragment (RSF) 820, 821, 822, 823, ... and a ranging integrity fragment (RIF) 830, 831, 832, 833, .... The RSF 820, 821, 822, 823, ... is for time of arrival (ToA), and the RIF 830, 831, 832, 833, ... is intended to prevent an error in distance measurement.

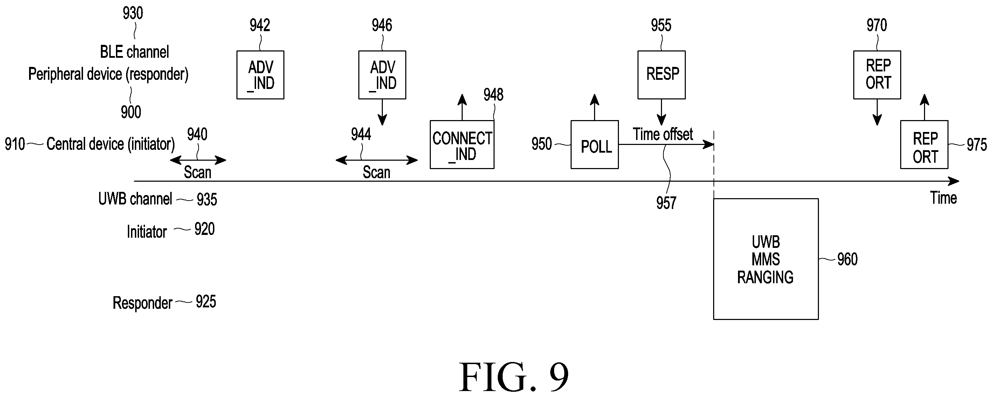

FIG. 9 illustrates creating a connection between devices for a report operation in a BLE channel and performing a report operation after UWB MMS ranging according to an embodiment of the disclosure.

FIG. 9 is a view illustrating an operation of a peripheral device 900 as a responder and a central device 910 as an initiator in an operation in a BLE channel 930 for UWB MMS ranging 960 according to an embodiment of the disclosure.

Referring to FIG. 9, the central device 910 is an initiator initiating a ranging exchange, and the peripheral device 900 may be a responder responding to the Initiator during the ranging exchange. The BLE channel 930 may be implemented as an initialization channel, a discovery channel, or a Coordination channel for the UWB MMS ranging 960. A ranging channel may include a UWB channel 935 in which the UWB MMS ranging 960 is performed.

In operation 940, the central device 910 may scan an ADV_IND message within a set time interval within the BLE channel, and may fail to receive the ADV_IND message. In an embodiment, the central device 910 may scan the ADV_IND of a device including the BLE based MMS Ranging Service UUID using information (shared key) previously connected to identify the peripheral device 900 to be found.

In operation 942, the peripheral device 900 may transmit (or broadcast) the ADV_IND message in the BLE channel. According to an embodiment, the ADV_IND message may include information as illustrated in Table 1 or Table 2 above.

In operation 944, the central device 910 may scan the ADV_IND message within a set time interval within the BLE channel. In operation 946, the peripheral device 900 may transmit (or broadcast) the ADV_IND message, and the central device 910 may receive the ADV_IND message transmitted by the peripheral device 900 according to the scan result. In operation 948, the central device 910 may transmit a CONNECT_IND message corresponding to the ADV_IND message to the peripheral device 900 within the BLE channel.

In operation 950, the central device 910 may transmit a POLL message to the peripheral device 900 as an initiator. In an embodiment, the POLL message may include at least one of the following Fields.
- Time Offset (4 Octets): Time from completion of receiving the Poll Message until the MMS Ranging occurs (in 1/499.2MHz resolution)
- UWB PHY Configuration (3 Octets)
- UWB MAC Configuration (2 Octets)
- NB MAC Configuration (4 Octets)

Further, the NB MAC Configuration (4 Octets) included in the POLL message may include the following information.
- Ranging Slot Duration index (3 bit): 0 - 8 (matched with {300, 600, ... , 2400} RSTUs
- Ranging Round Duration (8 bit): 0 - 255 ranging slots
- Ranging Block Duration (8bit): 0 - 255 ranging slots
- Report mode (2bit): 0 - None, 1 - Initiator only, 2 - Responder only, 3 - Initiator and Responder
- Reserved for future use (3bit)
- RSF offset (4 bit) - Offset of MMS ranging (RpRsfOffset in below figure)
- RIF offset (4 bit) - Offset of MMS ranging (RpRifOffset in below figure)

In an embodiment, in the case of the Report mode (2bit), in subsequent operation 970, the peripheral device 900 and the central device 910 may indicate a method for exchanging a report 970, 975 on the UWB MMS ranging 960. In an embodiment, when the Report mode is 0 ('00'), the Report mode may indicate that neither the initiator nor the responder transmits a report. In an embodiment, when the Report mode is 1 ('01'), the Report mode may indicate that only the initiator transmits a report. In an embodiment, when the Report mode is 2 ('10'), the Report mode may indicate that only the responder transmits a report. In an embodiment, when the Report mode is 3 ('11'), the Report mode may indicate that both the initiator and the responder transmit a report.

In operation 955, the peripheral device 900 may transmit a RESP message to the central device 910 as a responder. When the central device 910 receives the RESP message during a preset time offset 957, in operation 960, the central device 910 may perform UWB MMS ranging with the peripheral device 920 as a responder 925 in the UWB channel 935 as an initiator 920.

In operation 970, the peripheral device 900 and the central device 910 may exchange a report 970, 975 on the UWB MMS ranging 960. Thereafter, after performing the UWB MMS Ranging, a result of the ranging may be transmitted to each other through a Report Message. In this case, a process of exchanging the Report may be omitted according to a value indicated by a 'Report mode' field included in the POLL message of operation 950, and unidirectional transmission of Central → Peripheral/Peripheral → Central is also possible.

In an embodiment, the Report of operation 970 may be transmitted at a time when subsequent BLE communication becomes available after the UWB MMS Ranging.

In an embodiment, the Report Message may include at least one of the following information and may be included in the form of a List.
- Block Index (2 Octets): Block index corresponding to the current Report
- Round Index (2 Octets): Round index corresponding to the current Report
- Number of Reply Time (2 Octets): Number of Reply Times included in the Report
- Reply Time ((N + 1) * 5 Octets): Time between RSF/RIF reception (from Initiator) and RSF/RIF transmission (from Responder) in UWB MMS Ranging

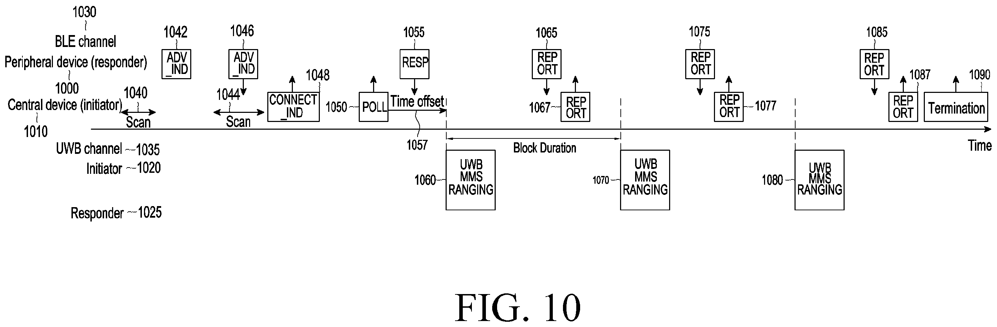

FIG. 10 illustrates creating a connection between devices in a BLE channel and performing repetitive UWB MMS ranging operations according to an embodiment of the disclosure.

FIG. 10 illustrates a procedure similar to FIG. 9, but illustrates performing UWB MMS ranging repeatedly every Block Duration after a connection is created using the CONNECT_IND transmitted by the central device upon receiving the ADV_IND transmitted by a specific peripheral device.

FIG. 10 is a view illustrating an operation of a peripheral device 1000 as a responder and a central device 1010 as an initiator in an operation in a BLE channel 1030 for the UWB MMS ranging 1060, 1070, 1080 according to an embodiment of the disclosure.

Referring to FIG. 10, the central device 1010 is an initiator initiating a ranging exchange, and the peripheral device 1000 may be a responder responding to the Initiator during the ranging exchange. The BLE channel 1030 may be implemented as an initialization channel, a discovery channel, or a Coordination channel for the UWB MMS ranging 1060, 1070, 1080. A ranging channel may include a UWB channel 1035 in which the UWB MMS ranging 1060 is performed.

The description of operations 1040 to 1160 may be replaced with the description of operations 940 to 960 of FIG. 9.

In operation 1055, the peripheral device 1000 may transmit a RESP message to the central device 1010 as a responder. When the central device 1010 receives the RESP message during a preset time offset 1057, in operation 1060, the central device 1010 may perform UWB MMS ranging with the peripheral device 1020 as a responder 1025 in the UWB channel 1035 as an initiator 1020.

In an embodiment, in the UWB channel 1035, the initiator 1020 and the responder 1025 may perform UWB MMS ranging 1060, 1070, 1080 a plurality of times with the block duration as a period until a termination 1090 signaling occurs. The central device 1010 operating as the initiator 1020 and the peripheral device 1000 operating as the responder 1025 in the UWB channel 1035 may transmit/receive a report after completing each UWB MMS ranging 1060, 1070, 1080 (1065, 1067, 1075, 1077, 1085, 1087).

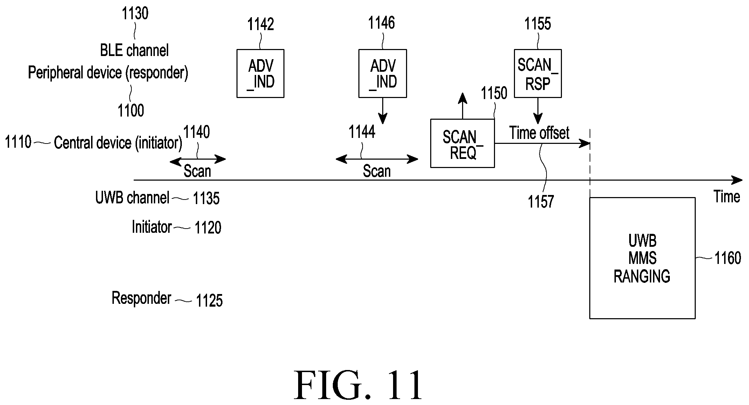

FIG. 11 illustrates performing a UWB MMS ranging operation without creating a connection between devices for a report operation in a BLE channel according to an embodiment of the disclosure.

FIG. 11 illustrates a case in which the initiator and the responder do not transmit a report after the UWB MMS ranging operation. In an embodiment, FIG. 11 illustrates a case in which a REPORT MODE set through a SCAN_REQ message indicates that neither the initiator nor the responder transmits a report after UWB MMS ranging, in a process in which the central device 1110 successfully searches for the peripheral device 1100 in the BLE channel 1130 and establishes a connection.

FIG. 11 is a view illustrating an operation of a peripheral device 1100 as a responder and a central device 110 as an initiator in an operation in a BLE channel 1030 for UWB MMS ranging 1160 according to an embodiment of the disclosure.

Referring to FIG. 11, the central device 1110 is an initiator initiating a ranging exchange, and the peripheral device 1100 may be a responder responding to the initiator during the ranging exchange. The BLE channel 1130 may be implemented as an initialization channel, a discovery channel, or a Coordination channel for the UWB MMS ranging 1160. A ranging channel may include a UWB channel 1135 in which the UWB MMS ranging 1160 is performed.

The description of operations 1140 to 1146 may be replaced with the description of operations 940 to 946 of FIG. 9.

Upon discovering the ADV_IND transmitted by a device to be found in operation 1144, in operation 1150, the central device 1110 may transmit UWB MMS ranging information using a SCAN_REQ message. In an embodiment, the SCAN_REQ message may include at least one of the information in Table 3.

**[Table 3]**

| Parameter | Size (octets) | Notes | Value (hex) |
|---|---|---|---|
| Length | 1 | Length of AD Type | 0x1A |
| AD Type | 1 | Service data - 128-bit UUID | 0x25 |
| AD Data | 16 | Service Protocol UUID | TBD |
| AD Data | 4 | Time Offset | |
| AD Data | 3 | UWB PHY Configuration | |
| AD Data | 2 | UWB MAC Configuration | |
| AD Data | 4 | NB MAC Configuration | |

Referring to Table 3, the SCAN_REQ message may include at least one of a UWB PHY configuration, a UWB MAC Configuration, and a NB MAC Configuration field. Further, the NB MAC Configuration field may include information on Report mode (2bit), like the NB MAC Configuration field included in the Poll message of FIG. 9. In an embodiment, in the case of the Report mode (2bit), the peripheral device 1100 and the central device 1110 may indicate a method for exchanging a report on the UWB MMS ranging 1160, and in the embodiment of FIG. 11, the Report mode may be set to 0 ('00') to indicate that neither the initiator nor the responder transmits a report. In operation 1155, the peripheral device 1100 may transmit a SCAN_RSP message. When the central device 1110 receives the SCAN-RSP message during the time offset 1157, in operation 1160, the central device 1110 may perform UWB MMS ranging with the peripheral device 1100 as a responder 1125 in the UWB channel 1135 as an initiator 1120. In an embodiment, upon failing to receive the ADV_IND even though the Scanning has been performed for the Advertisement Interval value obtained previously or a (preset) real number multiple of this value, the central device 1110 may notify the user that the device is not nearby (i.e., it is possible to notify the user by identifying that the device is absent before Scan timeout).

In an embodiment, upon failing to receive the ADV_IND including the BLE based MMS Ranging Service UUID of the peripheral device to be found even though scanning has been performed for the Advertisement Interval value obtained before Scanning or a (preset) real number multiple of this value, the central device 1110 may notify the user to move to another location to discover the peripheral device.

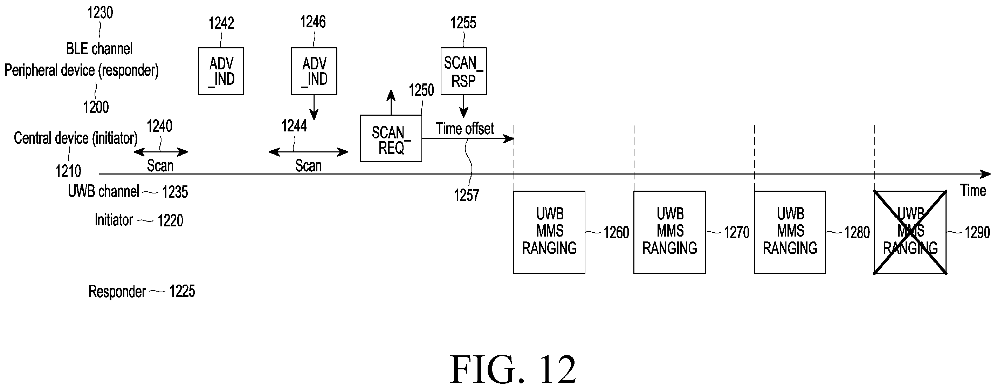

FIG. 12 illustrates an implicit termination operation in BLE-based MMS ranging according to an embodiment of the disclosure.

FIG. 12 illustrates a case in which there is no report operation after UWB MMS ranging as in the embodiment illustrated in FIG. 11, and the description of operations 1240 to 1260 may be replaced with the description of operations 1140 to 1160.

Referring to FIG. 12, when the central device 1210 receives the SCAN-RSP message during the time offset 1257, in operation 1260, the central device 1210 may perform UWB MMS ranging with the peripheral device 1200 as a responder 1225 in the UWB channel 1235 as an initiator 1220, and thereafter may perform repetitive UWB MMS ranging (1270, 1280). In this case, since the central device 1210 and the peripheral device 1200 have not performed a BLE channel connection for a report, there is no data channel (e.g., BLE channel) to notify termination after performing UWB MMS ranging. Accordingly, the central device 1240 in the UWB channel 1235 may implicitly convey a termination intention as the initiator 1220 through a method of not transmitting an RSF or RIF included in the MMS ranging operation.

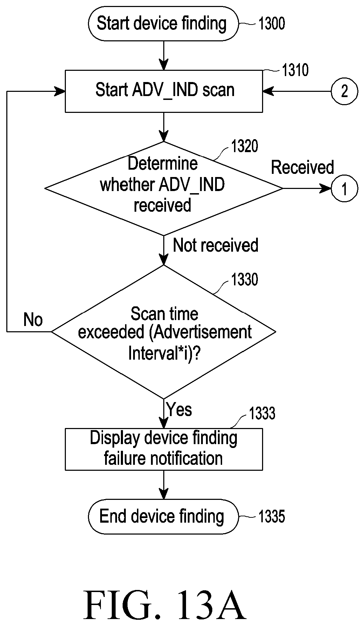

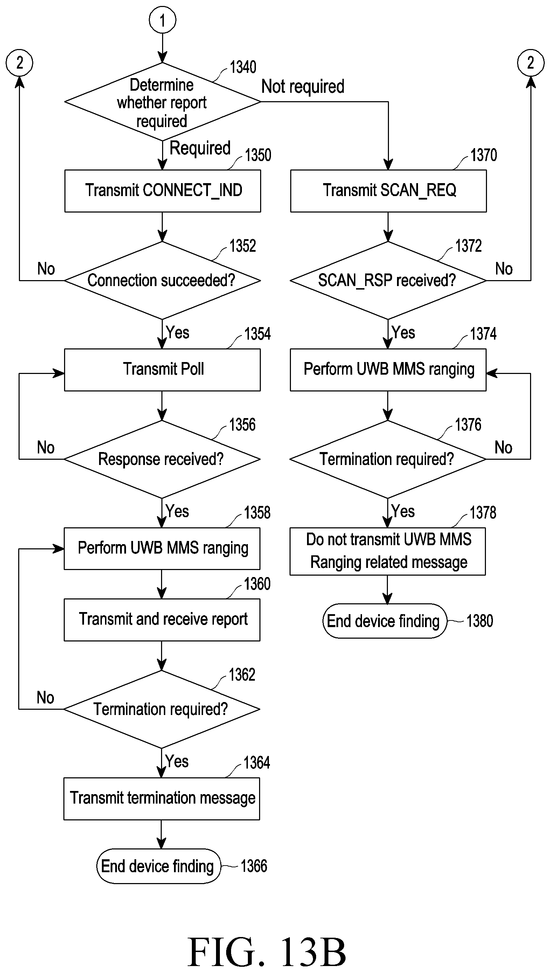

FIGS. 13A and 13B are flowcharts illustrating an operation of a central device according to an embodiment of the disclosure.

The central device and the peripheral device in FIGS. 13A and 13B may include the central device 700 and the peripheral device 710 illustrated in FIG. 7.

In step 1300, the central device may start discovering a device of the peripheral device. In an embodiment, in step 1300, upon receiving a device discovering input from a user, the central device may start discovering a device of the peripheral device.

In step 1310, the central device may start scanning the ADV_IND transmitted by the peripheral device.

In step 1320, the central device may determine whether the ADV_IND of the peripheral device to be found has been received. When the central device determines that the ADV_IND of the peripheral device to be found has not been received in step 1320, in step 1330, the central device may determine whether a scan time has exceeded the Advertisement interval or a real number multiple of the Advertisement interval. In an embodiment, the Advertisement interval information may be included in the ADV_IND received when performing an initial connection to the peripheral device to be found. In an embodiment, the Advertisement interval information may also be obtained through data communication or a GATT Profile from the peripheral device after Connection setup with the peripheral device to be found.

When the central device determines in step 1330 that the scan time has exceeded the Advertisement interval, in step 1333, the central device may display a device discovering failure notification. Thereafter, in step 1335, the central device may end discovering a device for the peripheral device.

When the central device determines in step 1330 that the scan time has not exceeded the Advertisement interval, the central device may scan the ADV_IND again in step 1310.

When the central device determines that the ADV_IND of the peripheral device to be found has been received in step 1320, in step 1340, the central device may determine whether a report is required after MMS ranging. In an embodiment, whether the report is required may be preset, and the central device may indicate whether the report is required to the peripheral device in a 'REPORT MODE' field included in the POLL message or SCAN_REQ to be transmitted to the peripheral device to be found.

When the central device determines that a report is required after MMS ranging in step 1340, in step 1350, the central device may transmit a CONNECT_IND to the peripheral device. In step 1352, the central device may determine whether the connection has succeeded. When the central device determines that the connection has succeeded in step 1352, in step 1354, the central device may transmit a Poll message. In step 1356, the central device may determine whether a response has been received from the peripheral device. When the central device determines that a response has not been received from the peripheral device in step 1356, the central device may transmit a Poll message to the peripheral device in step 1354.

When the central device determines that a response has been received from the peripheral device in step 1356, in step 1358, the central device may perform UWB MMS ranging. In step 1360, the central device may transmit/receive a Report with the peripheral device. In step 1362, the central device may determine whether termination of the UWB MMS ranging is required. When the termination is not required in step 1362, the central device may perform UWB MMS ranging with the peripheral device in step 1358. Accordingly, the central device may repetitively perform UWB MMS ranging with the peripheral device and transmit/receive a Report until it is determined that termination of the UWB MMS ranging is required in step 1362.

When the central device determines that termination of the UWB MMS ranging is required in step 1362, the central device may transmit a termination message to the peripheral device in step 1364 and end device discovering in step 1366. In an embodiment, the termination message may be transmitted in an OOB channel including a BLE channel, not a channel performing UWB ranging.

When the central device determines that the connection has not succeeded in step 1352, the central device may start ADV_IND scanning in step 1310 and perform subsequent operations.

When the central device determines that a report is not required after MMS ranging in step 1340, in step 1370, the central device may transmit a SCAN_REQ to the peripheral device. In step 1372, the central device may determine whether a SCAN_RSP has been received. When the central device determines that a SCAN_RSP has not been received from the peripheral device in step 1372, the central device may start ADV_IND scanning in step 1310 and perform subsequent operations.

When the central device determines that a SCAN_RSP has been received in step 1372, in step 1374, the central device may perform UWB MMS ranging. In step 1376, the central device may determine whether termination of the UWB MMS ranging is required. When the central device determines that termination is not required in step 1376, the central device may perform UWB MMS ranging with the peripheral device in step 1374. Accordingly, the central device may repetitively perform UWB MMS ranging with the peripheral device until it is determined that termination of the UWB MMS ranging is required in step 1376. When the central device determines that termination of the UWB MMS ranging is required in step 1376, in step 1378, the central device may not transmit a UWB MMS ranging related message, and may end device discovering in step 1380.

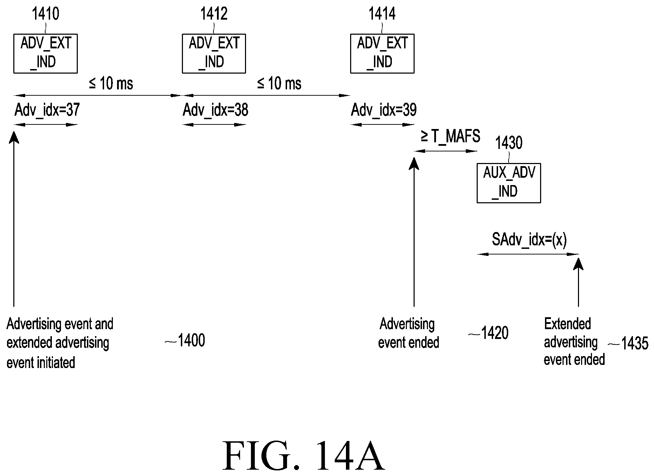

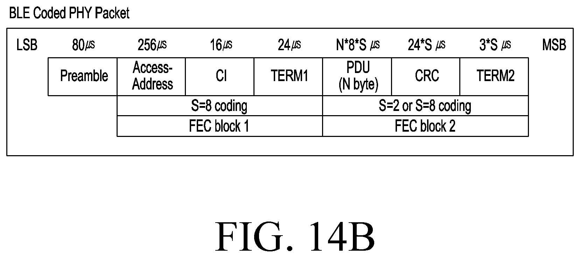

FIGS. 14A and 14B illustrate a BLE coded PHY used in BLE-based MMS ranging according to an embodiment of the disclosure.

FIGS. 14A and 14B describe that, during a BLE-based MMS ranging operation, a BLE Coded PHY may be used to cover a distance discoverable by MMS ranging because a coverage distance of MMS Ranging is farther than a coverage distance of existing BLE (1 M / 2 M PHY).

To use the Coded PHY, the peripheral device may replace an existing message with the following message.
- ADV_IND → AUX_ADV_IND
- CONNECT_IND → AUX_CONNECT_REQ
- SCAN_REQ → AUX_SCAN_REQ
- SCAN_RSP → AUX_SCAN_RSP

FIG. 14A illustrates an example in which the peripheral device transmits a message using the Coded PHY. When an advertising event and an extended advertising event are initiated (1400), in operation 1410, the peripheral device may transmit an ADV_EXT_IND. In operations 1412, 1414, the peripheral device may transmit an ADV_EXT_IND at regular intervals until the advertising event ends (1420). In operation 1430, the peripheral device may periodically transmit an AUX_ADV_IND until the extended advertising event ends (1435).

FIG. 14B illustrates an example of a BLE Coded PHY packet.

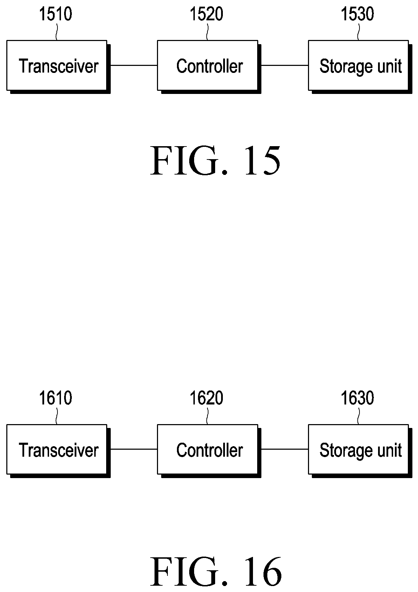

FIG. 15 illustrates a structure diagram illustrating a first electronic device according to an embodiment of the disclosure.

In the embodiment of FIG. 15, the first electronic device may be an electronic device corresponding to a UWB device, including a UWB device, or including a portion of a UWB device.

In the embodiment of FIG. 15, the first electronic device may include the central device illustrated in FIGS. 7 to 14.

Referring to FIG. 15, the electronic device may include a transceiver 1510, a controller 1520, and a storage unit 1530. In the disclosure, the controller may be defined as a circuit or application-specific integrated circuit or at least one processor.

The transceiver 1510 may transmit and receive signals to/from another entity. The transceiver 1510 may transmit/receive data with another device using, e.g., UWB communication and/or OOB communication (e.g., BLE).

The controller 1520 includes at least one processor and may control an overall operation of the electronic device according to an embodiment proposed in the disclosure. For example, the controller 1520 may control a signal flow between each block to perform an operation according to the flowchart described above. Specifically, the controller 1520 may control an operation (e.g., an operation of a framework) of the electronic device described with reference to FIGS. 1 to 14.

The at least one processor may control to receive, from a user, an input instructing a search for a second electronic device. The at least one processor may control to scan a Bluetooth low energy (BLE) advertisement message associated with ultra-wideband (UWB) multi-millisecond (MMS) ranging of the second electronic device. The at least one processor may control to determine, upon failing to receive the BLE advertisement message from the second electronic device, whether a time corresponding to a real number multiple of an advertisement interval associated with the second electronic device has been exceeded. The at least one processor may control to stop an operation of scanning the BLE advertisement message upon the time corresponding to the real number multiple of the advertisement interval being exceeded. In an embodiment, the information on the advertisement interval may have been received from the second electronic device.

The at least one processor may control to determine, upon receiving a BLE advertisement message from the second electronic device, based on a predetermined setting, whether a report on the UWB MMS ranging is required. The at least one processor may control to transmit, upon the report on the UWB MMS ranging being required, a CONNECT_IND message to the second electronic device.

The at least one processor may control to transmit, upon the report on the UWB MMS ranging not being required, a SCAN_REQ message to the second electronic device. The at least one processor may control to transmit, after transmitting the CONNECT_IND message, a Poll message to the second electronic device. The at least one processor may control to perform, upon receiving a Response message from the second electronic device, UWB MMS ranging with the second electronic device. The at least one processor may control to perform at least one of transmitting a report to the second electronic device or receiving a report from the second electronic device in a BLE channel based on a predetermined setting. In an embodiment, the Poll message may include an indicator indicating a method for a report on the UWB MMS ranging.

The storage unit 1530 may store at least one of information transmitted and received through the transceiver 1510 and information generated through the controller 1520. For example, the storage unit 1530 may store information and data necessary for the method described above with reference to FIGS. 1 to 15. In an embodiment, the storage unit may include the above-described secure component.

FIG. 16 illustrates a structure diagram illustrating a second electronic device according to an embodiment of the disclosure.

In the embodiment of FIG. 16, the second electronic device may be an electronic device corresponding to a UWB device, including a UWB device, or including a portion of a UWB device.

In the embodiment of FIG. 16, the second electronic device may include the peripheral device illustrated in FIGS. 7 to 14.

Referring to FIG. 16, the electronic device may include a transceiver 1610, a controller 1620, and a storage unit 1630. In the disclosure, the controller may be defined as a circuit or application-specific integrated circuit or at least one processor.

The transceiver 1610 may transmit and receive signals to/from another entity. The transceiver 1610 may transmit/receive data with another device using, e.g., UWB communication and/or OOB communication (e.g., BLE).

The controller 1620 includes at least one processor and may control an overall operation of the electronic device according to an embodiment proposed in the disclosure. For example, the controller 1620 may control a signal flow between each block to perform an operation according to the flowchart described above. Specifically, the controller 1620 may control an operation (e.g., an operation of a framework) of the electronic device described with reference to FIGS. 1 to 14.

The at least one processor may control to transmit, to a first electronic device, information on an advertisement interval associated with a second electronic device. The at least one processor may control to transmit, to the first electronic device, a Bluetooth low energy (BLE) advertisement message associated with ultra-wideband (UWB) multi-millisecond (MMS) ranging. In an embodiment, scanning of the BLE advertisement message may be stopped upon a time corresponding to a real number multiple of the advertisement interval associated with the second electronic device being exceeded.

The at least one processor may control to receive, upon a report on the UWB MMS ranging being required, a CONNECT_IND message from the first electronic device. The at least one processor may control to receive, upon a report on the UWB MMS ranging not being required, a SCAN_REQ message from the first electronic device. The at least one processor may control to receive, after receiving the CONNECT_IND message, a Poll message from the first electronic device. The at least one processor may transmit a Response message to the first electronic device. The at least one processor may perform UWB MMS ranging with the first electronic device. In an embodiment, the Poll message may include an indicator indicating a method for a report on the UWB MMS ranging. The at least one processor may control to perform, based on the indicator, at least one of transmitting a report to the first electronic device or receiving a report from the first electronic device in a BLE channel.

The storage unit 1630 may store at least one of information transmitted and received through the transceiver 1610 and information generated through the controller 1620. For example, the storage unit 1630 may store information and data necessary for the method described above with reference to FIGS. 1 to 16. In an embodiment, the storage unit may include the above-described secure component.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Meanwhile, although specific embodiments of the present disclosure have been described above, various changes may be made thereto without departing from the scope of the present disclosure. Thus, the scope of the present invention should not be limited to the above-described embodiments, and should rather be defined by the following claims and equivalents thereof.

## Claims

1. A method of a first electronic device, the method comprising:
receiving, from a second electronic device, information on an advertisement interval associated with the second electronic device;
receiving, from a user, an input instructing a search for the second electronic device;
in response to the input, scanning a Bluetooth low energy (BLE) advertisement message associated with ultra-wide band (UWB) multi-millisecond (MMS) ranging of the second electronic device; and
stopping an operation of scanning the BLE advertisement message, in case that the BLE advertisement message is not received from the second electronic device for a time corresponding to a real number multiple of the advertisement interval.

2. The method of claim 1, further comprising:
in case that the BLE advertisement message is received from the second electronic device, determining, based on a predetermined setting, whether a report on the UWB MMS ranging is required; and
in case that the report on the UWB MMS ranging is required, transmitting, to the second electronic device, a CONNECT_IND message.

3. The method of claim 2, further comprising:
in case that the report on the UWB MMS ranging is not required, transmitting, to the second electronic device, a SCAN_REQ message.

4. The method of claim 2, further comprising:
after transmitting the CONNECT_IND message, transmitting, to the second electronic device, a Poll message;
in case that a Response message is received from the second electronic device, performing UWB MMS ranging with the second electronic device; and
performing at least one of transmitting a report to the second electronic device or receiving a report from the second electronic device in a BLE channel based on a predetermined setting, wherein the Poll message includes an indicator indicating a scheme for a report on the UWB MMS ranging.

5. A method of a second electronic device, the method comprising:
transmitting, to a first electronic device, information on an advertisement interval associated with the second electronic device; and
transmitting, to the first electronic device, a Bluetooth low energy (BLE) advertisement message associated with ultra-wide band (UWB) multi-millisecond (MMS) ranging,
wherein scanning of the BLE advertisement message is stopped, in case that a time corresponding to a real number multiple of the advertisement interval is exceeded.

6. The method of claim 5, further comprising,
in case that a report on the UWB MMS ranging is required, receiving, from the first electronic device, a CONNECT_IND message.

7. The method of claim 6, further comprising,
in case that a report on the UWB MMS ranging is not required, receiving, from the first electronic device, a SCAN_REQ message.

8. The method of claim 6, further comprising:
after receiving the CONNECT_IND message, receiving a Poll message from the first electronic device, the Poll message including an indicator indicating a scheme for a report on the UWB MMS ranging;
transmitting, to the first electronic device, a Response message;
performing UWB MMS ranging with the first electronic device; and
performing, based on the indicator, at least one of transmitting a report to the first electronic device or receiving a report from the first electronic device in a BLE channel.

9. A first electronic device, comprising:
a transceiver; and
at least one processor, wherein the at least one processor is configured to:
receive, from a second electronic device, information on an advertisement interval associated with the second electronic device;
receive, from a user, an input instructing a search for the second electronic device;
in response to the input, scan a Bluetooth low energy (BLE) advertisement message associated with ultra-wide band (UWB) multi-millisecond (MMS) ranging of the second electronic device; and
stop an operation of scanning the BLE advertisement message, in case that the BLE advertisement message is not received from the second electronic device for a time corresponding to a real number multiple of the advertisement interval.

10. The first electronic device of claim 11, wherein the at least one processor is further configured to:
in case that a BLE advertisement message is receive from the second electronic device, determine, based on a predetermined setting, whether a report on the UWB MMS ranging is required; and
in case that the report on the UWB MMS ranging is required, transmit, to the second electronic device, a CONNECT_IND message.

11. The first electronic device of claim 12, wherein the at least one processor is further configured to:
in case that the report on the UWB MMS ranging is not required, transmit, to the second electronic device, a SCAN_REQ message.

12. The first electronic device of claim 12, wherein the at least one processor is configured to:
after transmitting the CONNECT_IND message, transmit, to the second electronic device, a Poll message;
in case that a Response message is received from the second electronic device, perform UWB MMS ranging with the second electronic device; and
perform at least one of transmitting a report to the second electronic device or receiving a report from the second electronic device in a BLE channel based on a predetermined setting, wherein the Poll message includes an indicator indicating a scheme for a report on the UWB MMS ranging.

13. A second electronic device, comprising:
a transceiver; and
at least one processor, wherein the at least one processor is configured to:
transmit, to a first electronic device, information on an advertisement interval associated with the second electronic device; and
transmit, to the first electronic device, a Bluetooth low energy (BLE) advertisement message associated with ultra-wide band (UWB) multi-millisecond (MMS) ranging,
wherein scanning of the BLE advertisement message is stopped, in case that a time corresponding to a real number multiple of the advertisement interval is exceeded.

14. The second electronic device of claim 13, wherein the at least one processor is configured to:
in case that a report on the UWB MMS ranging is required, receive, from the first electronic device, a CONNECT_IND message; and
in case that a report on the UWB MMS ranging is not required, receive, from the first electronic device, a SCAN_REQ message.

15. The second electronic device of claim 14, wherein the at least one processor is configured to:
after receiving the CONNECT_IND message, receive a Poll message from the first electronic device, the Poll message including an indicator indicating a scheme for a report on the UWB MMS ranging;
transmit, to the first electronic device, a Response message;
perform UWB MMS ranging with the first electronic device; and
perform, based on the indicator, at least one of transmitting a report to the first electronic device or receiving a report from the first electronic device in a BLE channel.
